# EUROPEAN PATENT APPLICATION

(11) **EP 2 610 448 A2**
(43) Date of publication of application: **03.07.2013**
(21) Application number: 12198062.7
(22) Date of filing: 19.12.2012
(51) Int. Cl.: F01N 3/022, B01D 46/00, B01D 46/24

(54) **Honeycomb structure and process for manufacturing the same**

(30) Priority: 26.12.2011 JP 2011283854
(71) Applicant: NGK Insulators, Ltd., Nagoya-city, Aichi 467-8530 (JP)
(72) Inventor: Miyairi, Yukio, Nagoya city, Aichi 467-8530 (JP)
(74) Representative: Naylor, Matthew John

(57) **Abstract**

There is provided a honeycomb structure including: a honeycomb substrate having porous partition walls separating and forming a plurality of cells functioning as fluid passages and plugging portions disposed in openings of predetermined cells on one end face and openings of the remaining cells on the other end face, wherein the partition walls contain ceramic as a main component, the number of cells having at least one pore passing from one surface to the other surface of a partition wall and having a minimum pore size of 100 µm or more is 100 or less, and the partition walls have a permeability of 0.5×10⁻¹²m² or more and 10×10⁻¹²m² or less.

## Description

The present application is an application based on JP 2011-283854 filed on 12/26/2011 with the Japanese Patent Office, the entire contents of which are incorporated herein by reference.

### Background of the Invention and Related Art Statement

The present invention relates to a honeycomb structure and a process for manufacturing the honeycomb structure. More specifically, the present invention relates to a honeycomb structure capable of efficiently trapping microparticles in exhaust gas and to a process for manufacturing such a honeycomb structure.

Gas discharged from internal combustion engines such as a diesel engine and a gasoline direct injection and various combustion apparatuses contains a large amount of particulate matter (PM) mainly containing soot. Since release of PM into the atmosphere with no change causes environmental pollution, a diesel particulate filter (DPF) for trapping the PM is mounted in an exhaust system for the exhaust gas.

As such a DPF, there is used, for example, a honeycomb structure "provided with porous partition walls separating and forming a plurality of cells and having plugging portions in one side end portions of predetermined cells and the other side end portions of the remaining cells" (see, e.g., JP-A-2002-159811).

In recent years, exhaust gas regulations has become strict, and the need to trap microparticles having small particle diameters (particulate matters having particle diameters smaller than about 100 µm) among particulate matters has been increasing. However, it is difficult to trap such microparticles sufficiently with a conventional DPF.

A conventional DPF has a large number of pores having large pore sizes to have a problem of allowing microparticles to leak out from such pores having large pore sizes. Therefore, a DPF capable of sufficiently trapping such microparticles has been demanded.

### Summary of the Invention

The present invention has been made in view of the aforementioned problems. The present invention provides a honeycomb structure capable of efficiently trapping microparticles in exhaust gas and a process capable of manufacturing such a honeycomb structure.

[1] A honeycomb structure comprising: a honeycomb substrate having porous partition walls separating and forming a plurality of cells functioning as fluid passages and plugging portions disposed in openings of predetermined cells on one end face and openings of the remaining cells on the other end face, wherein the partition walls contain ceramic as a main component, the number of cells having at least one pore passing from one surface to the other surface of a partition wall and having a minimum pore size of 100 µm or more (hereinbelow sometimes referred to as a "coarse pore") is 100 or less, and the partition walls have a permeability of 0.5×10⁻¹²m² or more and 10×10⁻¹²m² or less.

[2] A process for manufacturing a honeycomb structure comprising: a honeycomb fired body manufacturing step of manufacturing a honeycomb fired body provided with porous partition walls separating and forming a plurality of cells functioning as fluid passages and formed by firing a ceramic raw material and plugging portions disposed in openings of predetermined cells on one end face and openings of the remaining cells on the other end face, a liquid entering step of allowing a liquid to enter pores of the partition walls of the honeycomb fired body, a ceramic raw material powder deposition step of passing gas having a ceramic raw material powder dispersed therein through the honeycomb fired body to deposit the ceramic raw material powder in the pores of the partition walls, a ceramic raw material powder adhesion step of producing a honeycomb structure by heating the honeycomb fired body having the ceramic raw material powder deposited in the pores to allow the ceramic raw material powder to adhere to the inside of the pores; wherein, in the liquid entering step, the amount of the liquid which is allowed to enter the pores of the partition walls of the honeycomb fired body is 30% or more and 100% or less of the entire capacity of the pores, and, in the ceramic raw material powder deposition step, the volume velocity at the time that the gas is passed through the honeycomb fired body is 50 (/hour) or more and 5000 (/hour) or less.

[3] The process for manufacturing a honeycomb structure according to [2], wherein the liquid has a boiling point of 50°C or more and 150°C or less.

[4] The process for manufacturing a honeycomb structure according to [2] or [3], wherein, in the liquid entering step, the method for allowing the liquid to enter the pores of the partition walls of the honeycomb fired body is a method of immersing the honeycomb fired body in the liquid.

[5] The process for manufacturing a honeycomb structure according to any one of [2] to [4], wherein, in the liquid entering step, after the liquid is allowed to enter the pores of the partition walls of the honeycomb fired body, gas is passed into the honeycomb fired body from the one end face.

[6] The process for manufacturing a honeycomb structure according to any one of [2] to [5], wherein, in the ceramic raw material powder deposition step, the ceramic raw material powder has an average particle diameter of 5 µm or more and 30 µm or less.

[7] The process for manufacturing a honeycomb structure according to any one of [2] to [6], wherein, in the ceramic raw material powder deposition step, the concentration of the ceramic raw material powder in the gas having the ceramic raw material powder dispersed therein is 1 mg/m³ or more and 1 g/m³ or less.

According to a honeycomb structure of the present invention, since "coarse pores" are few or not present, microparticles in the exhaust gas can efficiently be trapped.

According to a process for manufacturing a honeycomb structure of the present invention, it is possible to efficiently manufacture a honeycomb structure of the present invention as described above.

### Brief Description of the Drawings

[Fig. 1] Fig. 1 is a perspective view schematically showing an embodiment of a honeycomb structure of the present invention.

[Fig. 2] Fig. 2 is a schematic view showing a cross section parallel to the cell extension direction of an embodiment of a honeycomb structure of the present invention.

[Fig. 3] Fig. 3 is a perspective view schematically showing a honeycomb formed body produced in a step for producing a honeycomb fired body in an embodiment of a process for manufacturing a honeycomb structure of the present invention.

[Fig. 4] Fig. 4 is a schematic view showing a cross section parallel to the cell extension direction of the honeycomb formed body produced in a step for producing a honeycomb fired body in an embodiment of a process for manufacturing a honeycomb structure of the present invention.

### Reference Numerals

1: partition wall, 2: cell, 3: outer peripheral wall, 4: honeycomb substrate, 5: plugging portion, 11: one end face, 12: the other end face, 20: honeycomb formed body, 21: partition wall, 22: cell, 23: outer peripheral wall, 100: honeycomb structure

### Detailed Description of the Invention

Hereinbelow, embodiments of the present invention will specifically be described with referring to the drawings. The present invention is by no means limited to the following embodiments. It should be understood that an embodiment obtained by suitably adding changes, improvements, and the like to the following embodiments on the basis of ordinary knowledge of a person of ordinary skill in the art within the range of not deviating from the gist of the present invention is included in the scope of the present invention.

### (1) Honeycomb structure:

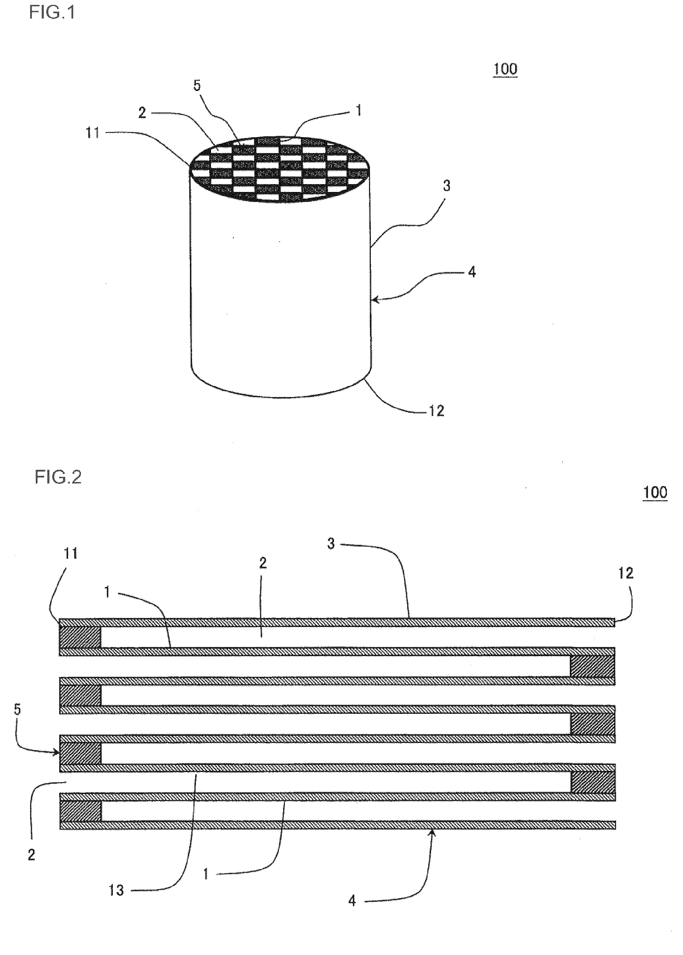

As shown in Figs. 1 and 2, an embodiment (honeycomb structure 100) of a honeycomb structure of the present invention is provided with a honeycomb substrate 4 having porous partition walls 1 separating and forming a plurality of cells 2 functioning as fluid passages. Further, the honeycomb structure 100 is provided with plugging portions 5 disposed in the openings of predetermined cells 2 on one end face (first end face) 11 and the openings of the remaining cells 2 on the other end face (second end face) 12. Further, in the honeycomb structure 100, the partition walls 1 contain ceramic as the main component. Further, the honeycomb structure 100 has 100 or less cells which have at least one pore (coarse pores) passing from one side surface to the opposite side surface of a partition wall and having a minimum pore size of 100 µm or more. Further, in the honeycomb structure 100, the partition walls have a permeability of 0.5×10⁻¹²m² or more and 10×10⁻¹²m² or less. The "pore having a minimum pore size of 100 µm or more" means a "pore having a pore size of 100 µm or more in the portion where the pore size is smallest from one side surface to the other side surface of the partition wall". The "cell having at least one coarse pore" will be described below. That is, the outer periphery of each cell is surrounded by partition walls . When at least one coarse pore is formed in the partition wall surrounding the outer periphery of one cell, the cell surrounded by the partition wall is a "cell having at least one coarse pore". Fig. 1 is a perspective view schematically showing one embodiment of a honeycomb structure of the present invention. Fig. 2 is a schematic view showing a cross section parallel to the cell extension direction of one embodiment of a honeycomb structure of the present invention.

Since a honeycomb structure of the present invention has few or no "coarse pore" as described above, it is possible to efficiently trap microparticles (particulate matters having particle diameters of below 100 µm) in exhaust gas.

In the honeycomb structure 100 of the present embodiment, the number of the "cells each having at least one coarse pore" whose minimum pore size is 100 µm or more is 100 or less. The number of the cells having at least one coarse pore is preferably 50 or less, more preferably 10 or less, particularly preferably 5 or less, and most preferably 0. When the number of the cells having at least one coarse pore is above 100, microparticles in exhaust gas cannot be trapped sufficiently, which is not preferable.

The number of the coarse pores is measured according to a method where criterial microparticles are introduced into the honeycomb structure to count the positions where the criterial microparticles have passed (measurement method by laser smoke) (e.g., the method described in JP-A-2002-357562). The number of the positions where the criterial microparticles have passed serves as the number of the "coarse pores". The criterial microparticles are microparticles adjusted to have a particle diameter with which "the microparticles easily pass the pores having pore sizes of 100 µm or more and hardly pass the pores having pore sizes of below 100 µm". In addition, upon counting "the number of the positions where the criterial microparticles have passed", it is preferable that the positions where the criterial microparticles have passed are visualized by irradiating the honeycomb structure with a laser beam or the like to detect the "positions where the criterial microparticles have passed". The "pore passing from one side surface to the opposite side surface of a partition wall" is, in other words, a "pore passing from one surface to the other surface of a partition wall".

In a honeycomb structure 100 of the present embodiment, the partition walls have a permeability of 0.5×10⁻¹²m² or more and 10×10⁻¹²m² or less. The permeability of the partition walls is preferably 1×10⁻¹²m² or more and 8×10⁻¹²m² or less, more preferably 2×10⁻¹²m² or more and 6×10⁻¹²m² or less. When the permeability of the partition walls is below 0 . 5×10⁻¹²m², pressure loss becomes large, which is not preferable. When the permeability of the partition walls is above 10×10⁻¹²m², it becomes difficult to trap the microparticles in exhaust gas, which is not preferable.

In the honeycomb structure 100 of the present embodiment, it is preferable that the material for the honeycomb substrate (partition walls and outer peripheral walls) contains, as the main component, at least one kind selected from the group consisting of silicon carbide, silicon-silicon carbide composite material, aluminum titanate, cordierite, and mullite. It is more preferable that the material for the honeycomb substrate contains, as the main component, silicon carbide, silicon-silicon carbide composite material, aluminum titanate, cordierite, or mullite. It is particularly preferable that the material for the honeycomb substrate is silicon carbide, silicon-silicon carbide composite material, aluminum titanate, cordierite, or mullite. Here, the "main component" means a component having a proportion of above 50 mass% of the whole.

In the honeycomb structure 100 of the present embodiment, the average pore size of the partition walls 1 is preferably 5 to 40 µm, more preferably 6 to 40 µm, and particularly preferably 8 to 35 µm. When the average pore size is smaller than 5 µm, the pressure loss may become large. When the average pore size is larger than 40 µm, the strength of the honeycomb structure may become low. The average pore size is measured by a mercury porosimeter.

In the honeycomb structure 100 of the present embodiment, the porosity of the partition walls 1 is preferably 35 to 70%, more preferably 38 to 70%, particularly preferably 40 to 65%. When the porosity is lower than 35%, the pressure loss may become large. When the porosity is higher than 70%, the strength of the honeycomb structure may become low. The porosity is measured by a mercury porosimeter.

The thickness of the partition walls 1 is preferably 50 to 400 µm, more preferably 76 to 310 µm, particularly preferably 100 to 300 µm. When it is smaller than 50 µm, the strength of the honeycomb structure may become low. When it is larger than 400 µm, the pressure loss may become large.

In the honeycomb structure 100 of the present embodiment, there is no particular limitation on the shape of the honeycomb substrate 4. Preferable shapes for the honeycomb substrate 4 include a circular cylindrical shape, a cylindrical shape having oval end faces, a polygonal cylindrical shape having end faces having a shape of a "square, rectangle, triangle, pentagon, hexagon, octagon, or the like", and the like. In the honeycomb structure 100 shown in Figs. 1 and 2, the shape of the honeycomb substrate 4 is a circular cylindrical shape. Though the honeycomb structure 100 shown in Figs. 1 and 2 has an outer peripheral wall 3, it is not necessary for the structure to have the outer peripheral wall 3. It is preferable that the outer peripheral wall 3 is formed together with the partition walls when the honeycomb formed body is formed by extrusion in the process for manufacturing the honeycomb structure. The outer peripheral wall 3 may be formed by applying a ceramic material on the peripheral face of the honeycomb structure.

In the honeycomb structure 100 of the present embodiment, there is no particular limitation on the cell shape (cell shape in a cross section perpendicular to the cell extension direction) of the honeycomb substrate 4. Examples of the cell shape include a triangle, quadrangle, hexagon, octagon, circle, and combination thereof. Among quadrangles, a square and a rectangle are preferable.

In the honeycomb structure 100 of the present embodiment, there is no particular limitation on the cell density of the honeycomb substrate 4. The cell density of the honeycomb substrate 4 is preferably 7 to 93 cells/cm², more preferably 15 to 78 cells/cm². When the cell density is smaller than 7 cells/cm², the area of the partition walls for trapping the particulate matter is small, and the pressure loss may become large in a short period of time when exhaust gas is passed into the substrate. When the cell density is larger than 93 cells/cm², since the cross sectional area of the cell (area of a cross section perpendicular to the cell extension direction) becomes small, the pressure loss may become large.

### (2) Process for manufacturing honeycomb structure:

One embodiment of a process for manufacturing a honeycomb structure of the present invention has a honeycomb fired body manufacturing step, a liquid entering step, a ceramic raw material powder deposition step, and a ceramic raw material powder adhesion step.

The honeycomb fired body manufacturing step is a step of manufacturing a honeycomb fired body provided with porous partition walls formed by firing a ceramic raw material and plugging portions. The porous partition walls separate and form a plurality of cells functioning as fluid passages. The plugging portions are disposed in the openings of the predetermined cells on one end face and the openings of the remaining cells on the other end face.

The liquid entering step is a step of allowing a liquid to enter the pores of the partition walls of the honeycomb fired body. In the liquid entering step, the amount of the liquid allowed to enter the pores of the partition walls of the honeycomb fired body is 30% or more and 100% or less of the entire pore capacity.

The ceramic raw material powder deposition step is a step of passing gas having a ceramic rawmaterial powder dispersed therein into the honeycomb fired body to deposit the ceramic raw material powder in the pores of the partition walls. In the ceramic raw material powder deposition step, the volume velocity at the time that the gas passes through the honeycomb fired body is 50 (/hour) or more and 5000 (/hour) or less.

The ceramic raw material powder adhesion step is a step of manufacturing a honeycomb structure by heating the honeycomb fired body having the "ceramic raw material powder having deposited in the pores" to allow the ceramic raw material powder to adhere to the inside of the pores.

According to the process for manufacturing a honeycomb structure of the present embodiment, since a liquid is allowed to enter the pores of the partition walls of the honeycomb fired body, it becomes difficult for the gas to pass through the pores. Since the gas having a ceramic raw material powder dispersed therein is passed into the honeycomb fired body in the state, the gas passes through the pores having large pore sizes. When the gas is passed into the pores filled with the liquid, the gas flows into the pores having large pore sizes while pushing the liquid aside. Then, the gas continues to flow through the "pores having large pore sizes" where a gas passage is formed. This causes deposition of the ceramic raw material powder dispersed in the gas inside the pores having large pore sizes. The ceramic raw material powder deposited inside the pores is heated for adhesion, thereby forming a new ceramic layer on the wall surfaces of the pores having large pore sizes. This makes the "pore sizes" of the pores having large pore sizes small, and the number of the "coarse pores" is reduced. Thus, a honeycomb structure of the present invention can be obtained.

Hereinbelow, the process for manufacturing a honeycomb structure of the present embodiment will be described step by step.

### (2-1) Honeycomb fired body manufacturing step:

The honeycomb fired body manufacturing step is a step of manufacturing a honeycomb fired body provided with porous partition walls formed by firing a ceramic raw material and plugging portions. There is no particular limitation on the method for manufacturing the honeycomb fired body. Hereinbelow, the honeycomb fired body manufacturing step will be described step by step in stages.

### (2-1-1) Forming step

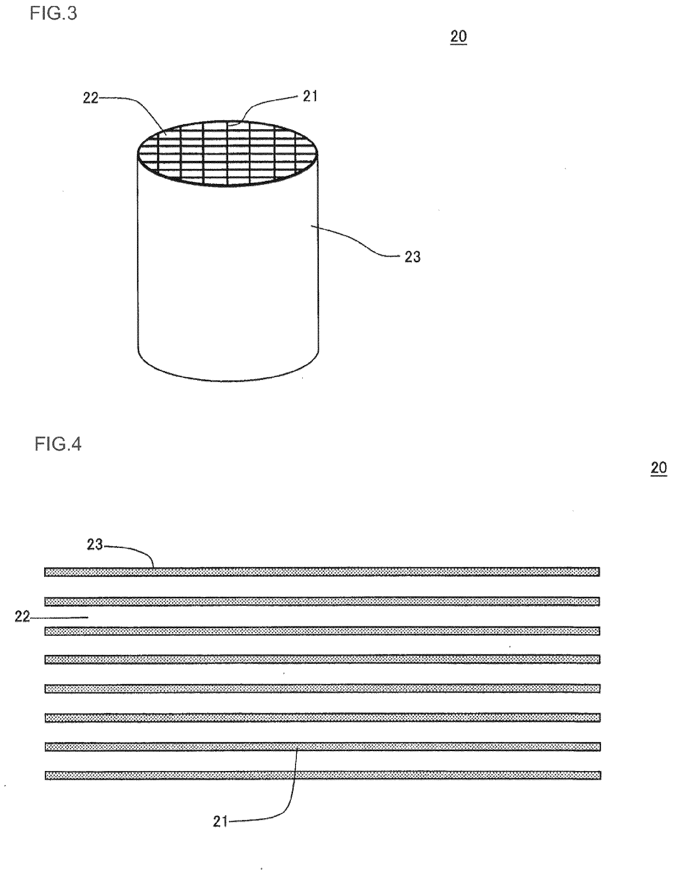

In the first place, it is preferable to form a ceramic forming raw material containing a ceramic raw material to form a honeycomb formed body 20 provided with partition walls (unfired) 21 separating and forming a plurality of cells 22 functioning as fluid passages as shown in Figs. 3 and 4. The honeycomb formed body is a formed body having a honeycomb structure. In the honeycomb formed body 20 shown in Figs. 3 and 4, an outer peripheral wall 23 is disposed so as to surround the outer periphery of the partition walls 21. Though it is preferable that the honeycomb formed body 20 is provided with the outer peripheral wall 23, the outer peripheral wall 23 may be omitted. Fig. 3 is a perspective view schematically showing a honeycomb formed body 20 produced in a step for producing a honeycomb fired body in one embodiment of a process for manufacturing a honeycomb structure of the present invention. Fig. 4 is a schematic view showing a cross section parallel to the cell 22 extension direction of the honeycomb formed body 20 produced in a step for producing a honeycomb fired body in an embodiment of a process for manufacturing a honeycomb structure of the present invention.

As the ceramic raw material contained in the ceramic forming raw material, there is preferably at least one kind selected from the group consisting of a cordierite-forming raw material, cordierite, silicon carbide, silicon-silicon carbide based composite material, mullite, and aluminum titanate. The cordierite-forming raw material is a ceramic raw material having a composition to have a chemical composition of 42 to 56 mass% of silica, 30 to 45 mass% of alumina, and 12 to 16 mass% of magnesia and turned into a cordierite by firing.

It is preferable that the ceramic forming raw material is prepared by mixing, with the aforementioned ceramic raw material, a dispersion medium, an organic binder, an inorganic binder, a pore former, a surfactant, and the like. There is no particular limitation on the composition ratio of the raw materials, and it is preferable to employ the composition ratio according to the structure, material, and the like of the honeycomb structure to be manufactured.

In order to adjust the permeability, the average pore size, and the porosity of the partition walls of the honeycomb structure to be manufactured, it is further preferable to adjust the average particle diameter of the ceramic raw material in the ceramic forming raw material and the average particle diameter of the pore former as described below.

That is, it is preferable to adjust the average particle diameter of the ceramic raw material to 0.5 µm or more and 30 µm or less. Further, it is preferable to adjust the average particle diameter of the pore former to 3 µm or more and 50 µm or less.

Upon forming a ceramic forming raw material, it is preferable to knead the ceramic forming raw material in the first place to obtain a kneaded material and then form the kneaded material into a honeycomb shape. There is no particular limitation on a method for preparing the kneaded material by kneading the ceramic forming raw material, and, for example, a method using a kneader, a vacuum kneader, or the like can be employed. There is no particular limitation on the method for forming a honeycomb formed body by forming the kneaded material, and a known forming method such as extrusion or injection may be employed. A suitable example is a method of forming a honeycomb formed body by extrusion using a die having desired cell shape, partition wall thickness, and cell density. As the material for the die, a superhard alloy, which hardly abrades away, is preferable.

There is no particular limitation on the shape of the honeycomb formed body, and preferred are a circular cylindrical shape, a cylindrical shape having oval end faces, a polygonal cylindrical shape having end faces having a shape of a "square, rectangle, triangle, pentagon, hexagon, octagon, or the like", and the like.

After the aforementioned forming, the honeycomb formed body obtained may be dried. Though there is no particular limitation on the drying method, examples of the drying method include hot air drying, microwave drying, dielectric drying, reduced pressure drying, vacuum drying, and freeze drying. Of these, it is preferable to perform dielectric drying, microwave drying, or hot air drying alone or in combination thereof.

### (2-1-2) Plugging step:

After the forming step, plugging portions are disposed in the openings of the "predetermined cells" on one end face of the honeycomb formed body. Incidentally, the plugging portions may be disposed on the fired honeycomb formed body after firing the honeycomb formed body.

In the first place, a plugging material is filled into the cell openings on one end face of the honeycomb formed body. As the method of filling the plugging material into the cell openings on one end face, a method having both a masking step and an injection step is preferable. The masking step is a step of bonding a sheet on one end face of the honeycomb formed body and making holes at the positions corresponding to the "cells where the plugging portions are to be formed" in the sheet. The injection step is a step of putting the "end portion on the side having the sheet bonded thereto of the honeycomb formed body" in the container containing the plugging material to inject the plugging material into the cells of the honeycomb formed body. Upon injecting the plugging material into the cells of the honeycomb formed body, the plugging material passes through the holes formed in the sheet and is filled into only the cells communicating with the holes formed in the sheet.

The plugging material can be prepared by appropriately mixing raw materials listed as the constituent elements for the aforementioned ceramic forming raw material . It is preferable that the ceramic raw material contained in the plugging material is the same as the ceramic raw material used as the raw material for the partition walls.

Next, it is preferable to dry the plugging material filled into the honeycomb formed body.

It is preferable that cells each having a plugging portion formed therein and cells each having no plugging portion formed therein are alternately arranged on one end face of the honeycomb formed body. In this case, on the end face where the plugging portions are formed, a checkerwise pattern is formed by the plugging portions and the "openings of the cells".

Next, it is preferable to dispose the plugging portions in the openings of the "remaining cells" on the other end face of the honeycomb formed body in the same manner as in the case of the one end face. This enables to obtain a plugged honeycomb formed body. The drying of the plugging material may be performed after filling the plugging material on both the end faces of the honeycomb formed body.

### (2-1-3) Firing step:

Next, the plugged honeycomb formed body is fired to manufacture a honeycomb fired body (firing step).

It is preferable to calcine the plugged honeycomb formed body before subjecting the plugged honeycomb formed body to firing (main firing). The calcination is performed for degreasing, and there is no particular limitation on the method as long as it can remove organic matter (organic binder, surfactant, pore former, and the like). Generally, the combustion temperature of the organic binder is about 100 to 300°C, and the combustion temperature of the pore former is about 200 to 800°C. Therefore, as the conditions for calcination, it is preferable to heat it at about 200 to 1000°C for about 3 to 100 hours in an oxidation atmosphere.

The firing (main firing) of the plugged honeycomb formed body is performed in order to secure predetermined strength by densification due to sintering the forming raw material constituting the calcined plugged honeycomb formed body. Since the firing conditions (temperature, time, atmosphere, and the like) differ depending on the kind of the forming raw material, appropriate conditions may be selected according to the kind. For example, in the case of using a cordierite-forming raw material, the firing temperature is preferably 1410 to 1440°C. The firing time is preferably 4 to 8 hours as the time for keeping the highest temperature. Though there is no particular limitation on the apparatus for the calcination and the main firing, an electric furnace, a gas furnace, or the like may be employed.

### (2-2) Liquid entering step:

The liquid entering step is a step of allowing a liquid to enter the pores of the partition walls of the honeycomb fired body. There is no particular limitation on the method of allowing the liquid to enter the pores of the partition walls of the honeycomb fired body. A preferable example is a method where the honeycomb fired body is immersed in a liquid stored in a container. It is further preferable that the entire honeycomb fired body is immersed in the liquid stored in the container and taken out after 0.1 to 10 minutes. When the honeycomb fired body is immersed in a liquid, the liquid enters the pores of the partition walls due to capillarity. At this time, pores having small pore sizes (small pores) are easily filled with the liquid, and coarse pores are hardly filled with the liquid. When the coarse pores are not filled with the liquid, it becomes easier to pass the gas containing a ceramic raw material powder dispersed therein into the coarse pores . Therefore, in the liquid entering step, it is preferable that, after the liquid is allowed to enter the pores of the partition walls of the honeycomb fired body, gas is sent to the honeycomb fired body from one end face. This enables the liquid filled into the coarse pores to be removed preferentially. Therefore, the gas containing the ceramic raw material powder dispersed therein can preferentially be passed into the coarse pores. Though it is preferable that the coarse pores are not filled with a liquid, they may be filled with a liquid. Even if the coarse pores are filled with a liquid, gas flows through the coarse pores more easily than the pores having small pore sizes. Therefore, even if the coarse pores are filled with a liquid, when the gas containing a ceramic raw material powder dispersed therein is sent into the honeycomb fired body, the gas flows into the coarse pores.

In the process for manufacturing a honeycomb structure of the present embodiment, the aforementioned liquid is a liquid having a boiling point of preferably 50°C or more and 150°C or less. With the boiling point of the liquid allowed to enter the pores within such a range, the liquid is easily evaporated at ordinary temperature. This makes drying after the ceramic raw material powder deposition step easy. The boiling point of the liquid is more preferably 50°C or more and 130°C or less, particularly preferably 60°C or more and 110°C or less. When the boiling point of the liquid is lower than 50°C, also the liquid filled into the small pores may be evaporated due to natural evaporation. This may make difficult the achievement of the flow of the "gas containing a ceramic raw material powder dispersed therein" into only the coarse pores. When the boiling point of the liquid is higher than 150°C, a drying step may be necessary to be added after the ceramic raw material powder deposition step. Examples of the liquid include water, ethanol, methanol, and "mixed liquid thereof".

In the process for manufacturing a honeycomb structure of the present embodiment, the amount of the liquid, in a liquid entering step, allowed to enter the pores of the partition walls of the honeycomb fired body is 30% or more and 100% or less of the entire capacity of the pores. The amount of the liquid allowed to enter the pores of the partition walls is preferably 50% or more and 80% or less, more preferably 60% or more and 70% or less of the entire capacity of the pores. When the amount of the liquid allowed to enter the pores of the partition walls of the honeycomb fired body is below 30% of the entire capacity of the pores, the number of the coarse pores of the honeycomb structure obtained becomes large, which is not preferable. The entire capacity of the pores of the partition walls is measured by mercury porosimetry. The amount of the liquid allowed to enter the pores of the partition walls is a value obtained by deducting the mass of the honeycomb fired body before the liquid is allowed to enter the pores of the partition walls from the mass of the honeycomb fired body after the liquid is allowed to enter the pores of the partition walls.

### (2-3) Ceramic raw material powder deposition step:

The ceramic raw material powder deposition step is a step of passing a "gas containing ceramic raw material powder dispersed therein" into the honeycomb fired body to deposit the ceramic raw material powder inside the pores of the partition walls. When the gas containing ceramic raw material powder dispersed therein is passed into the honeycomb fired body, the gas preferentially flows into the coarse pores. This makes the ceramic raw material powder preferentially deposited in the coarse pores. Therefore, the resultant honeycomb structure has few coarse pores.

In the process for manufacturing a honeycomb structure of the present embodiment, the average particle diameter of the ceramic raw material powder is preferably 5 µm or more and 30 µm or less. By controlling the average particle diameter of the ceramic raw material powder within such a range, the ceramic raw material powder is easily deposited preferentially in the "coarse pores". When it is smaller than 5 µm, the ceramic raw material powder is easily deposited in the "pores having small pore sizes". When it is larger than 30 µm, it may become difficult for the ceramic raw material powder to pass through the pores of the partition walls.

In the process for manufacturing a honeycomb structure of the present embodiment, the volume velocity at the time that the "gas containing ceramic raw material powder dispersed therein" passes through the honeycomb fired body is 50 (/hour) or more and 5000 (/hour) or less. The volume velocity at the time that the aforementioned gas passes through the honeycomb fired body is preferably 100 (/hour) or more and 1000 (/hour) or less, more preferably 200 (/hour) or more and 800 (/hour) or less. Since the aforementioned gas has a volume velocity upon passing through the honeycomb fired body within such a range, the ceramic raw material powder can be deposited in the pores having a pore size of 100 µm or more. The longer time of allowing the gas containing ceramic raw material powder dispersed therein to pass through the honeycomb fired body enables the gas to fly up to the liquid filled into the pores having the smaller pore size. Therefore, depending on the time for allowing the gas containing ceramic raw material powder dispersed therein to pass, the pore size of the pores where the ceramic raw material powder is deposited can be controlled. When the afore-mentioned volume velocity is below 50 (/hour), the time of the ceramic raw material powder deposition step becomes long to reduce the productivity of the honeycomb structure, which is not preferable. Further, when the aforementioned volume velocity is below 50 (/hour), the ceramic raw material powder is easily deposited in the pores having small pore sizes to reduce permeability of the partition walls, which is not preferable. When the volume velocity is above 5000 (/hour), the ceramic raw material powder is easily deposited in the pores having small pore sizes to reduce permeability of the partition walls, which is not preferable. The unit "/hour" of the volume velocity can be written as "1/hour".

In the process for manufacturing a honeycomb structure of the present embodiment, the concentration of the ceramic raw material powder in the "gas containing ceramic raw material powder dispersed therein" is preferably 1 mg/m³ or more and 1 g/m³ or less. The concentration of the ceramic raw material powder in the "gas containing ceramic raw material powder dispersed therein" is more preferably 10 mg/m³ or more and 0.5 g/m³ or less, particularly preferably 20 mg/m³ or more and 0.3 g/m³ or less. When the concentration of the ceramic raw material powder in the gas containing ceramic raw material powder dispersed therein is below 1 mg/m³, the time of the ceramic raw material powder deposition step becomes long, and the productivity of the honeycomb structure may fall. When the concentration of the ceramic raw material powder in the gas containing ceramic raw material powder dispersed therein is above 1 g/m³, the pores may easily be clogged with the ceramic raw material powder.

### (2-4) Ceramic raw material powder adhesion step:

The ceramic raw material powder adhesion step is a step of heating the honeycomb fired body having the "ceramic raw material powder deposited inside the pores" to produce a honeycomb structure by allowing the ceramic raw material powder to adhere to the inside of pores.

In the aforementioned ceramic raw material powder deposition step, the ceramic raw material powder is deposited inside the coarse pores of the partition walls of the honeycomb fired body. Therefore, by heating the honeycomb fired body in this state, the ceramic raw material powder can be allowed to adhere to the inside of the coarse pores. This makes the pore size of the pores having large pore sizes small, and the number of the coarse pores can be reduced.

There is no particular limitation on the heating conditions upon heating the honeycomb fired body where the "ceramic raw material powder is deposited in the pores". For example, the heating is preferably performed at 1380 to 1450°C for 0.5 to 2 hours.

### Examples

Hereinbelow, a honeycomb structure of the present invention and a process for manufacturing the honeycomb structure will be describedmore specifically with referring to Examples. The present invention is by no means limited to these Examples.

### (Example 1)

As the ceramic raw material, there was used a mixture obtained by mixing a silicon carbide (SiC) powder and a metal silicon (Si) powder at the mass ratio of 80:20. To the mixture were added hydroxypropylmethyl cellulose as a binder, a water-absorbent resin as a pore former, and water to prepare a forming raw material. The forming raw material was kneaded with a vacuum kneader to obtain a circular columnar kneaded material. The binder content was 7 parts by mass with respect to 100 parts by mass of the sum of the silicon carbide (SiC) powder and the metal silicon (Si) powder. The pore former content was 3 parts by mass with respect to 100 parts by mass of the sum of the silicon carbide (SiC) powder and the metal silicon (Si) powder. The water content was 42 parts by mass with respect to 100 parts by mass of the sum of the silicon carbide (SiC) powder and the metal silicon (Si) powder. The average particle diameter of the silicon carbide powder was 20 µm, and the average particle diameter of the metal silicon powder was 6 µm. The average particle diameter of the pore former was 20 µm. The average particle diameters of the silicon carbide, metal silicon, and pore former were measured by a laser diffraction method.

The circular columnar kneaded material obtained above was formed by the use of an extruder to obtain a honeycomb formed body. After the honeycomb formed body was dried by high frequency dielectric heating, it was further dried at 120°C for two hours by the use of a hot air drier.

Plugging portions were formed in the dried honeycomb formed body. In the first place, a mask was applied to a part of the multiple cell openings on one end face (first end face) of the honeycomb formed body. At this time, the cells having the mask and the cells having no mask were arranged alternately. The end portion having the mask of the honeycomb formed body was immersed in plugging slurry containing a cordierite-forming raw material to fill the plugging slurry into the openings of the cells with no mask. Plugging portions were formed also in the remaining cells (cells having no plugging portion on the one end face) on the other end face (second end face) of the honeycomb formed body after drying in the same manner.

The honeycomb formed body having plugging portion formed therein was degreased and fired to obtain a honeycomb fired body. The degreasing was performed at 550°C for three hours. The firing was performed at 1450°C for two hours in an argon atmosphere.

Next, a liquid was allowed to enter the pores of the partition walls of the honeycomb fired body. As the liquid, water was used. Specifically, after the entire honeycomb fired body was immersed in water stored in a container for 0.1 minute, the honeycomb fired body was taken out from the container, and the superfluous water in the outer periphery was blown away by air blow. The liquid (water) having entered the pores of the honeycomb fired body accounted for 75% of the entire capacity of the pores. The entire capacity of the pores of the partition walls was measured by mercury porosimetry. The amount of the liquid allowed to enter the pores of the partition walls was obtained by deducting the mass of the honeycomb fired body before the liquid was allowed to enter the pores of the partition walls from the mass of the honeycomb fired body after the liquid was allowed to enter the pores of the partition walls. The "ratio of the volume of water having entered the pores of the honeycomb fired body to the entire capacity of the pores" is shown in Table 1 as the "water absorption amount" (%).

By passing the "gas containing ceramic raw material powder dispersed therein" into the "honeycomb fired body where the liquid was allowed to enter the partition walls", the ceramic raw material powder was deposited inside the pores of the partition walls. As the ceramic raw material powder, a SiC powder was used. As the gas, air was used. Specifically, the air containing a SiC powder dispersed therein was passed into the cells from one end face of the "honeycomb fired body where the liquid was allowed to enter the partition walls" for 10 seconds. The air passed into the cells passed through the partition walls and was discharged from the end face on the other side of the "honeycomb fired body where the liquid was allowed to enter the partition walls". The air containing a SiC powder dispersed therein was passed into the "honeycomb fired body where the liquid was allowed to enter the partition walls" at a volume velocity (SV) of 2000 (/hour) . This enabled the gas containing ceramic raw material powder dispersed therein to be passes into the "honeycomb fired body where the liquid was allowed to enter the partition walls". The SiC powder dispersed in the gas (air) was deposited inside the pores of the partition walls. The average pore size of the ceramic raw material powder was 10 µm. The average particle diameter of the ceramic raw material powder is shown in Table 1 as the "raw material powder particle diameter" (µm). The average particle diameter of the ceramic raw material powder is a value measured by a sedimentation method. The concentration of the ceramic raw material powder dispersed in the gas (concentration in gas) was 2000 mg/m³.

Next, the honeycomb fired body where the ceramic raw material powder was deposited inside the pores was heated to obtain a honeycomb structure by allowing the ceramic raw material powder to adhere to the inside of the pores. The heating was performed at 1300°C for one hour.

The bottom face of the honeycomb structure obtained above had a circular shape having a diameter of 14.4 cm, and the length of the honeycomb structure in the cell extension direction was 15.2 cm. The thickness of the partition walls was 305 µm, and the cell density was 46.5 cells/cm².

Regarding the honeycomb structure obtained above, the number of cells having at least one coarse pore was measured by the method shown below to measure the "permeability of the partition walls" (m²). The results are shown in Table 1. Regarding the honeycomb structure obtained above, the "pressure loss" (kPa) and "PN (number of particulates)" (particulates/km) were measured by the method shown below. The results are shown in Table 1. The "PN" is an abbreviation of "PM number" (number of particulates).

Regarding the "pressure loss", 2.0 kPa or less was evaluated as passed (A), and above 2.0 kPa was evaluated as failed (B). Regarding the "PN", 1.0 (particulate/km) or less was evaluated as passed (A), and above 1.0 (particulate/km) was evaluated as failed (B).

In Table 1, the column of "liquid entering step" shows whether the operation (step) of allowing the liquid to enter the pores of the partition walls" was performed or not. "Yes" means that the operation of allowing the liquid to enter the pores of the partition walls was performed. "No" means that the operation of allowing the liquid to enter the pores of the partition walls was not performed. In the case that the "liquid entering step" was not performed, none of the subsequent steps that follow was performed, and the honeycomb fired body served as the honeycomb structure as it was.

In the case that both of the evaluation results of the "pressure loss" and the "PN" were passed (A), the "overall evaluation" was given as passed (A). In the case that one of the evaluation results of the "pressure loss" and the "PN" was failed (B), the "overall evaluation" was given as failed (B).

### (Pressure loss)

Using a flow bench (air flow bench), air of 10 (Nm³/min.) was sent into the honeycomb structure. The temperature of the air and the honeycomb structure was room temperature (25°C) . Upon sending the air into the honeycomb structure, the pressure of the air just before entering the honeycomb structure and the pressure of the air just after the air was discharged from the honeycomb structure were measured. The value obtained by deducting the pressure loss of the air just after the air was discharged from the honeycomb structure from the pressure of the air just before entering the honeycomb structure was determined as the pressure loss.

### (PN)

A honeycomb structure was installed in a position under the flour of the exhaust system of a vehicle with a displacement 2 liter diesel engine. The vehicle driving on a chassis dynamometer in the NEDC mode, which is a driving mode according to the European regulations, was performed. The number of the discharged microparticles (particulates) was measured by a measurement method according to the European regulations.

### (Number of cells having at least one coarse pore)

The number of cells having at least one coarse pore was measured by a measurement method with laser smoke. The measurement method with laser smoke was as follows. Criterial microparticles were introduced from one end face of the honeycomb structure and discharged from the other end face (discharge end face) . The discharge end face faced upside in the vertical direction. The laser beam spreading in a planar fashion was delivered in parallel with the discharge end face. The distance between the laser beam spreading in a planar fashion and the discharge end face was about 4 mm. Since the criterial microparticles leaked out from the coarse pores, in the case of having coarse pores, the criterial microparticles having leaked out were irradiated with the laser beam to show diffuse reflection, thereby being visualized. Therefore, by counting the number of the visualized microparticle discharge positions (cells), the "number of the cells having at least one coarse pore" could be confirmed. Incidentally, the criterial microparticles were generated by a method using smoke of an incense stick.

**Table 1**

| | Manufacturing condition | | | | Honeycomb structure | | Evaluation result | | | | |
|---|---|---|---|---|---|---|---|---|---|---|---|
| | Liquid entering step | Raw material powder particle diameter (µm) | Volume velocity (/hour) | Water absorption amount (%) | Number of cells having at least one coarse pore | Permeability (m²) | Pressure loss | | PN | | Overall Evaluation |
| | | | | | | | (kPa) | Evaluation | (particulates/km) | Evaluation | |
| Example 1 | Yes | 10 | 2000 | 75 | 0 | 4×10⁻¹² | 1.5 | A | 0.05×10¹¹ | A | A |
| Example 2 | Yes | 10 | 2000 | 75 | 0 | 4×10⁻¹² | 1.5 | A | 0.05×10¹¹ | A | A |
| Example 3 | Yes | 10 | 5000 | 75 | 5 | 4×10⁻¹² | 1.5 | A | 0.1×10¹¹ | A | A |
| Example 4 | Yes | 10 | 2000 | 75 | 8 | 4×10⁻¹² | 1.5 | A | 0.15×10¹¹ | A | A |
| Example 5 | Yes | 10 | 2000 | 80 | 10 | 4 × 10⁻¹² | 1.5 | A | 0.25×10¹¹ | A | A |
| Example 6 | Yes | 8 | 1000 | 100 | 15 | 4 × 10⁻¹² | 1.5 | A | 0.28×10¹¹ | A | A |
| Example 7 | Yes | 8 | 1000 | 65 | 20 | 4×10⁻¹² | 1.5 | A | 0.3×10¹¹ | A | A |
| Example 8 | Yes | 8 | 1000 | 50 | 30 | 4×10⁻¹² | 1.5 | A | 0.3×10¹¹ | A | A |
| Example 9 | Yes | 10 | 2000 | 30 | 45 | 4×10⁻¹² | 1.5 | A | 0.35×10¹¹ | A | A |
| Example 10 | Yes | 5 | 50 | 50 | 48 | 4×10⁻¹² | 1.5 | A | 0.35×10¹¹ | A | A |
| Example 11 | Yes | 10 | 2000 | 60 | 10 | 2× 10⁻¹² | 1.6 | A | 0.25 × 10¹¹ | A | A |
| Example 12 | Yes | 10 | 2000 | 60 | 10 | 0.5×10⁻¹² | 1.8 | A | 0.25×10¹¹ | A | A |
| Example 13 | Yes | 1 | 50 | 75 | 80 | 4×10⁻¹² | 1.5 | A | 0.65×10¹¹ | A | A |
| Example 14 | Yes | 1.5 | 50 | 75 | 70 | 4×10⁻¹² | 1.5 | A | 0.62×10¹¹ | A | A |
| Example 15 | Yes | 3 | 1000 | 75 | 55 | 4×10⁻¹² | 1.5 | A | 0.55×10¹¹ | A | A |
| Example 16 | Yes | 10 | 5000 | 75 | 60 | 4×10⁻¹² | 1.5 | A | 0.55×10¹¹ | A | A |
| Example 17 | Yes | 10 | 35 | 75 | 85 | 4×10⁻¹² | 1.5 | A | 0.65×10¹¹ | A | A |
| Example 18 | Yes | 10 | 2000 | 30 | 100 | 4×10⁻¹² | 1.5 | A | 0.75×10¹¹ | A | A |
| Comp. Ex. 1 | Yes | 10 | 30 | 75 | 10 | 0.3 × 10⁻¹² | 3.2 | B | 0.25×10¹¹ | A | B |
| Comp. Ex. 2 | Yes | 10 | 6000 | 75 | 10 | 0.1×10⁻¹² | 3.5 | B | 0.25×10¹¹ | A | B |
| Comp. Ex. 3 | Yes | 10 | 2000 | 20 | 110 | 4 × 10⁻¹² | 1.5 | A | 1.55×10¹¹ | B | B |
| Comp. Ex. 4 | Yes | 10 | 2000 | 10 | 120 | 4×10⁻¹² | 1.5 | A | 1.7×10¹¹ | B | B |
| Comp. Ex. 5 | No | - | - | - | 130 | 4×10⁻¹² | 1.5 | A | 2.0×10¹¹ | B | B |
| Comp. Ex. 6 | No | - | - | - | 150 | 5×10⁻¹² | 1.4 | A | 2.2×10¹¹ | B | B |

### (Examples 2 to 18, Comparative Examples 1 to 6)

The honeycomb structures were manufactured in the same manner as in Example 1 except that conditions were changed as shown in Table 1. Regarding each of the honeycomb structures obtained, the number of the "pores passing from one surface of the partition walls to the surface on the other side and having a minimum pore size of 100 µm or more" (coarse pore) was counted. Regarding each of the honeycomb structures obtained above, the "permeability of the partition walls" (m²) was measured by the aforementioned method. The results are shown in Table 1. Further, regarding each of the honeycomb structures, the "pressure loss" (kPa) and "PN" (particulates/km) were measured by the method described below. The results are shown in Table 1.

From Table 1, it is understood that the honeycomb structures (Examples 1 to 18) each having 100 or less of cells having at least one coarse pore and having partition walls having a permeability of 0.5×10⁻¹²m² or more and 10×10⁻¹²m² or less has little pressure loss and few PN (number of particulates) . In addition, it is understood that, when a honeycomb structure is manufactured by a process having no liquid entering step, the number of the cells having at least one coarse pore exceeds 100 (Comparative Examples 5 and 6). It is understood that, when a honeycomb structure is manufactured by a process having no liquid entering step, the PN (number of particulates) of the resultant honeycomb structure is large (Comparative Examples 5 and 6) .

It is understood that, when the amount of the liquid allowed to enter the pores of the partition walls of the honeycomb fired body is below 30% of the entire capacity of the pores in the liquid entering step, the number of the cells having at least one coarse pore of the resultant honeycomb structure is large (Comparative Examples 3 and 4). In addition, it is understood that, when the volume velocity is below 50 (/hour) in the ceramic raw material powder deposition step, the permeability of the partition walls becomes low (Comparative Example 1). In addition, when the volume velocity is above 5000 (/hour) in the ceramic raw material powder deposition step, the permeability of the partition walls becomes low (Comparative Example 2) .

### Industrial Applicability

A honeycomb structure of the present invention can suitably be used as a filter for purifying exhaust gas discharged from internal combustion engines such as a diesel engine and a gasoline direct injection and various combustion apparatuses. In addition, a process for manufacturing a honeycomb structure of the present invention can suitably be used for manufacturing such a honeycomb structure.

## Claims

1. A honeycomb structure comprising:
a honeycomb substrate having porous partition walls separating and forming a plurality of cells functioning as fluid passages and plugging portions disposed in openings of predetermined cells on one end face and openings of the remaining cells on the other end face,
wherein the partition walls contain ceramic as a main component,
the number of cells having at least one pore passing from one surface to the other surface of a partition wall and having a minimum pore size of 100 µm or more is 100 or less, and
the partition walls have a permeability of 0.5×10⁻¹²m² or more and 10×10⁻¹²m² or less.

2. A process for manufacturing a honeycomb structure comprising:
a honeycomb fired body manufacturing step of manufacturing a honeycomb fired body provided with porous partition walls separating and forming a plurality of cells functioning as fluid passages and formed by firing a ceramic raw material and plugging portions disposed in openings of predetermined cells on one end face and openings of the remaining cells on the other end face,
a liquid entering step of allowing a liquid to enter pores of the partition walls of the honeycomb fired body,
a ceramic raw material powder deposition step of passing gas having a ceramic raw material powder dispersed therein through the honeycomb fired body to deposit the ceramic raw material powder in the pores of the partition walls,
a ceramic raw material powder adhesion step of producing a honeycomb structure by heating the honeycomb fired body having the ceramic raw material powder deposited in the pores to allow the ceramic raw material powder to adhere to the inside of the pores;
wherein, in the liquid entering step, the amount of the liquid which is allowed to enter the pores of the partition walls of the honeycomb fired body is 30% or more and 100% or less of the entire capacity of the pores, and,
in the ceramic raw material powder deposition step, the volume velocity at the time that the gas is passed through the honeycomb fired body is 50 (/hour) or more and 5000 (/hour) or less.

3. The process for manufacturing a honeycomb structure according to Claim 2, wherein the liquid has a boiling point of 50°C or more and 150°C or less.

4. The process for manufacturing a honeycomb structure according to Claim 2 or 3, wherein, in the liquid entering step, the method for allowing the liquid to enter the pores of the partition walls of the honeycomb fired body is a method of immersing the honeycomb fired body in the liquid.

5. The process for manufacturing a honeycomb structure according to any one of Claims 2 to 4, wherein, in the liquid entering step, after the liquid is allowed to enter the pores of the partition walls of the honeycomb fired body, gas is passed into the honeycomb fired body from the one end face.

6. The process for manufacturing a honeycomb structure according to any one of Claims 2 to 5, wherein, in the ceramic raw material powder deposition step, the ceramic raw material powder has an average particle diameter of 5 µm or more and 30 µm or less.

7. The process for manufacturing a honeycomb structure according to any one of Claims 2 to 6, wherein, in the ceramic raw material powder deposition step, the concentration of the ceramic raw material powder in the gas having the ceramic raw material powder dispersed therein is 1 mg/m³ or more and 1 g/m³ or less.
